# EUROPÄISCHE PATENTANMELDUNG

(11) **EP 4 050 194 A1**
(43) Veröffentlichungstag der Anmeldung: **31.08.2022**
(21) Anmeldenummer: 22156732.4
(22) Anmeldetag: 15.02.2022
(51) Int. Cl.: F01N 3/20, F01N 3/10

(54) **HEIZSYSTEM FÜR EIN ABGASREINIGUNGSSYSTEM EINES VERBRENNUNGSMOTORS**

(30) Priorität: 23.02.2021 DE 102021104274
(71) Anmelder: Friedrich Boysen GmbH & Co. KG, 72213 Altensteig (DE)
(72) Erfinder: Gamst, Marvin, 72459 Albstadt (DE); Rathfelder, Tobias, 75387 Altbulach (DE)
(74) Vertreter: Manitz Finsterwald Patent- und Rechtsanwaltspartnerschaft mbB

(57) **Zusammenfassung**

Die vorliegende Erfindung betrifft ein Heizsystem für ein Fahrzeug mit einer Brennkraftmaschine 10, insbesondere zum Vorheizen eines Abgasreinigungssystems. Das Heizsystem umfasst eine Prozesskammer 32 mit einer Katalyseeinrichtung 46 zur katalytischen Verbrennung eines Brennstoffs, insbesondere eines flüssigen Brennstoffs, mit Umgebungsluft, ein mit der Prozesskammer 32 in Verbindung stehendes Zufuhrsystem zur Versorgung der Prozesskammer mit einen Brennstoff-Umgebungsluft-Gemisch und ein Abfuhrsystem 34 zur Abfuhr eines durch die katalytische Verbrennung erwärmten Gasgemisches aus der Prozesskammer 32, wobei das Zufuhrsystem dazu eingerichtet und ausgebildet ist, Umgebungsluft mittels einer Luftpumpe 22 anzusaugen. Weiter sind eine Injektionsvorrichtung 26 stromaufwärts vor einer Drallkammer 24 und einer elektrischen Heizeinrichtung 30 vor der katalytisch wirkenden Prozesskammer 32.

## Beschreibung

Die Erfindung betrifft ein Heizsystem für ein Fahrzeug mit einer Brennkraftmaschine.

Die Emissionen solcher Fahrzeuge unterliegen strengen gesetzlichen Regelungen. Die Abgase der Motoren werden zur Einhaltung dieser Regelungen einer aufwändigen Nachbehandlung unterzogen.

Aufgrund der sich ständig verschärfenden gesetzlichen Regelungen besteht jedoch Bedarf für weitere Effizienzsteigerung bei der Abgasreinigung.

Problematisch ist oftmals noch das Reinigungsverhalten der entsprechenden Einrichtungen, wenn diese vergleichsweise kalt sind, z.B. kurz nach dem Start der Brennkraftmaschine oder nach einer längeren Pause. Liegt nämlich die Temperatur einer katalytisch reinigenden Komponente unter ihrer jeweiligen Betriebstemperatur (beispielsweise 250 bis 280°C), so ist ihre Reinigungswirkung unbefriedigend. Erst wenn die Komponente durch das heiße Abgas der Brennkraftmaschine hinreichend aufgewärmt ist, entfaltet die entsprechende Abgasreinigungseinrichtung hinreichend gute Reinigungsergebnisse.

Es wird daher versucht, katalytisch reinigende Komponenten durch geeignete Einrichtung vorzuwärmen, damit sie schneller ihre Betriebstemperatur erreichen und damit der Wirkungsgrad der Abgasreinigungseinrichtung gesteigert wird. Dabei kommen üblicherweise Brennersysteme zum Einsatz, die einen Brennstoff unter Erzeugung einer Flamme verbrennen. Die heißen Verbrennungsprodukte werden dann zur Vorheizung der genannten Komponenten genutzt.

Heizsysteme für einen mobilen Einsatz in Fahrzeugen müssen hohe Anforderungen erfüllen. Sie müssen einerseits kompakt sein, andererseits müssen sie auch bei den unterschiedlichsten Umweltbedingungen stets zuverlässig funktionieren und die gewünschte Leistung erbringen. Es ist außerdem von zunehmender Bedeutung, dass auch die Schadstoffemissionen derartiger Heizsysteme minimiert sind. Vorteilhaft ist auch, wenn sie sich auf einfache Weise in bestehende Abgasanlagen integrieren lassen.

Diese Aufgabe wird durch ein Heizsystem mit den Merkmalen des Anspruchs 1 gelöst.

Erfindungsgemäß weist das Heizsystem für ein Fahrzeug mit einer Brennkraftmaschine eine Prozesskammer mit einer Katalyseeinrichtung zur katalytischen Verbrennung eines Brennstoffs, insbesondere eines flüssigen Brennstoffs mit Umgebungsluft auf. Ferner ist ein mit der Prozesskammer in Verbindung stehendes Zufuhrsystem zur Versorgung der Prozesskammer mit einem Brennstoff-Umgebungsluft-Gemisch und ein Abfuhrsystem zur Abfuhr eines durch die katalytische Verbrennung erwärmten Gasgemisches aus der Prozesskammer vorgesehen. Das Zufuhrsystem ist dazu eingerichtet und ausgebildet, Umgebungsluft anzusaugen.

Das Heizsystem nutzt einen festen Katalysator, um eine exotherme Reaktion des Brennstoff-Umgebungsluft-Gemischs zu erzeugen, ohne dass dieses mit einer offenen Flamme verbrennt. Eine katalytische Verbrennung wird bei der Abgasnachbehandlung bekanntermaßen eingesetzt, um beispielsweise Kohlenstoffmonoxid sowie unverbrannte Kohlenwasserstoffe in dem Abgasstrom einer Brennkraftmaschine mit NOx und Sauerstoff zu Kohlenstoffdioxid sowie Stickstoff und Wasser umzusetzen. Die dabei entstehende Wärme ist ein in der Regel nicht genutztes Nebenprodukt dieses Prozesses.

Erfindungsgemäß wird die katalytische Verbrennung genutzt, um bewusst Wärme zu erzeugen, die für andere Zwecke in einer Abgasanlage eines Fahrzeugs verwendet werden kann. Beispielsweise kann die Wärme zum Vorheizen von Komponenten eines Abgasreinigungssystems herangezogen werden, sodass diese nach einem Kaltstart der Brennkraftmaschine schneller ihre Betriebstemperatur erreichen.

Vorteilhafterweise wird dabei Umgebungsluft mit einem Brennstoff, beispielsweise mit dem die Brennkraftmaschine versorgt wird, versetzt und katalytisch verbrannt. Diese Vorgehensweise ist unter Umständen effizienter, als anstelle der Umgebungsluft auf Abgas zurückzugreifen, was auch positive Auswirkungen auf den für das Heizsystem erforderlichen Bauraum hat. Zudem wird eine Verschmutzung des Systems bei dessen Betrieb verringert und damit dessen Zuverlässigkeit erhöht. Die Verwendung von Umgebungsluft geht ferner mit dem Vorteil einher, dass ausreichend Sauerstoff für die Verbrennung zur Verfügung steht und das System unabhängig von dem Motor betrieben oder geregelt werden kann.

Das Zufuhrsystem kann grundsätzlich unabhängig von der restlichen Abgasanlage ausgestaltet sein, zumindest hinsichtlich der Gasführung, was die Komplexität des Systems verringert. Eine Verbindung des Abfuhrsystems mit der vorzuheizenden Komponente lässt sich ebenfalls auf einfache Weise herstellen.

Weitere vorteilhafte Ausführungsformen der vorliegenden Erfindung sind den Ansprüchen, der Beschreibung und den beigefügten Zeichnungen zu entnehmen.

Gemäß einer vorteilhaften Ausführungsform weist das Zufuhrsystem eine Luftpumpe zum Ansaugen von Umgebungsluft auf. Denkbar ist, eine Pumpe vorzusehen, die nur für die Versorgung des Heizsystems dient. Es ist aber auch möglich, Umgebungsluft aus einem anderen System des Fahrzeugs, in dem das Heizsystem zum Einsatz gelangt, zu entnehmen und/oder mit der Pumpe andere Systeme des Fahrzeugs mit Umgebungsluft zu versorgen.

Um die katalytische Verbrennung zu optimieren, kann es vorteilhaft sein, die Umgebungsluft zu verwirbeln. Zu diesem Zweck kann das Zufuhrsystem eine Drallerzeugungseinrichtung umfassen, die der angesaugten Umgebungsluft zumindest eine Drallkomponente aufprägt, um so einen drallbeaufschlagten Umgebungsluftstrom zu erzeugen. Beispielsweise ist eine Drallkammer vorgesehen, in der die Drallerzeugungseinrichtung angeordnet ist. Die Drallerzeugungseinrichtung kann zumindest einen statischen Mischer umfassen. Zusätzlich oder alternativ kann die Drallerzeugung durch ein gerichtetes Eindüsen der Umgebungsluft in die Drallkammer erfolgen.

Eine verbesserte Verwirbelung der Umgebungsluft kann auch durch die Maßnahme bewirkt werden, die Umgebungsluft auf zwei oder mehr Wegen in die Drallkammer einzubringen. Insbesondere steht die Drallkammer mit zumindest zwei, bevorzugt mit mehrere separate Einlasspfaden, insbesondere Einlassleitungen oder Einlassrohren, in Verbindung, mittels derer Umgebungsluft in die Drallkammer einbringbar ist. Beispielsweise wird ein von der Luftpumpe ausgegebener Umgebungsluftstrom in mehrere Teilströme aufgeteilt, die dann an verschiedenen Stellen in die Drallkammer eingebracht werden.

Die Drallkammer kann über zumindest einen Auslasspfad, insbesondere über zumindest eine Auslassleitung oder ein Auslassrohr, mit der Prozesskammer in Verbindung stehen. Grundsätzlich ist es aber auch möglich, zwei oder mehr parallele Auslasspfade vorzusehen.

Gemäß einer weiteren Ausführungsform umfasst das Zufuhrsystem eine Injektionsvorrichtung zum Einbringen des Brennstoffs in die Umgebungsluft, insbesondere in den drallbeaufschlagten Umgebungsluftstrom, um ein Brennstoff-Umgebungsluft-Gemisch zu erzeugen. Bevorzugt ist die Injektionsvorrichtung derart angeordnet, dass der Brennstoff in die Drallkammer einbringbar ist, da dort eine besonders gute Vermischung des Brennstoffs mit der Umgebungsluft bewirkt werden kann.

Stromaufwärts der Prozesskammer kann eine Strömungsleiteinrichtung vorgesehen sein, die derart ausgebildet und angeordnet ist, um Dralllkomponenten einer Strömung des Brennstoff-Umgebungsluft-Gemischs zu reduzieren. Durch eine Homogenisierung der Strömung wird der durch die stromabwärts der Strömungsleiteinrichtung erzeugte Gegendruck reduziert.

Insbesondere ist die Katalyseeinrichtung derart ausgestaltet und angeordnet, dass sie zumindest abschnittsweise von dem Brennstoff-Umgebungsluft-Gemisch umströmbar und/oder durchströmbar ist. Bevorzugt ist sie hinsichtlich ihrer Formgebung dahingehend optimiert, dass einerseits eine möglichst große Oberfläche zur effizienten Reaktion des Brennstoff-Umgebungsluft-Gemischs bereitgestellt wird und andererseits der von ihr erzeugte Strömungswiderstand hinreichend gering ist. Beispielsweise weist die Katalysatoreinrichtung einen - in Strömungsrichtung gesehen - wabenartige Struktur auf. Es versteht sich, dass sich die Menge des pro Zeiteinheit der Katalyseeinrichtung zugeführten Brennstoff-Umgebungsluft-Gemischs und damit auch die Dimensionierung und Ausgestaltung der Katalyseeinrichtung an der Menge der bereitzustellenden Wärme orientiert.

Die Katalyseeinrichtung besteht bevorzugt zumindest teilweise aus einem katalytisch wirksamen Material oder umfasst ein Substrat, das mit einem solchen Material beschichtet ist. Insbesondere umfasst das katalytisch wirksame Material ein Metall und/oder ein Mischoxid. Das Substrat kann ein Metall und/oder einen keramischen Werkstoff umfassen. Mischformen der vorstehend beschriebenen Bauformen sind möglich.

Da die Effizienz der Katalyseeinrichtung in der Regel von der Temperatur abhängt, kann diese eine Heizeinrichtung aufweisen. Die Heizeinrichtung ist bevorzugt elektrisch betreibbar. Beispielsweise basiert sie auf dem Prinzip der Widerstandsheizung. Mittels einer solchen Heizeinrichtung kann die Katalyseeinrichtung schnell auf einen optimalen Betriebspunkt gebracht werden, was wiederum eine schnelle Bereitstellung eines erhitzten Gasmassestroms zur Vorheizung eines Abgasreinigungssystems ermöglicht. Durch eine derartige Heizeinrichtung wird eine direkte Beheizung der Katalyseeinrichtung erreicht.

Eine Heizeinrichtung kann auch eine von der Katalyseeinrichtung separate, vorgeschaltete Einrichtung sein, die das Brennstoff-Umgebungsluft-Gemisch bereits erwärmt, bevor dieses auf die Katalyseeinrichtung trifft (indirekte Beheizung der Katalyseeinrichtung). Eine derartige Heizeinrichtung und die Katalyseeinrichtung können auch ineinander übergehen, sodass eine Vorheizung des anströmenden Gemischs erfolgt und gleichzeitig auch eine direkte Heizung eines Eingangsbereichs der Katalyseeinrichtung erfolgt.

Die Luftpumpe, die Injektionsvorrichtung und/oder die Heizeinrichtung können mittels einer Steuereinrichtung ansteuerbar sein, um einen möglichst effizienten Betrieb des Heizsystems zu gewährleisten. Die Steuereinrichtung kann auch mit zumindest einem Sensor des Heizsystems verbunden sein, der zumindest einen Betriebsparameter des Systems erfasst und an die Steuereinrichtung ausgibt, sodass diese bei Bedarf zur Sicherstellung eines sicheren und effizienten Betriebs des Systems reagieren kann. Das Heizsystem kann zu diesem Zweck auch steuerbare oder regelbare Ventil- und/oder Drosseleinrichtungen aufweisen.

Wenn das Heizsystem einen möglichst modularen Charakter aufweisen soll, um beispielsweise als Nachrüstsystem fungieren zu können, kann deren Steuereinrichtung als systemspezifisches Modul ausgestaltet sein, dass mit einer übergeordneten Steuerung, beispielsweise einer Fahrzeugsteuerung, verbindbar ist. Grundsätzlich ist aber auch denkbar, die relevanten Komponenten des Heizsystems direkt von einer übergeordneten Steuerung steuern zu lassen.

Die vorliegende Erfindung betrifft ferner ein Fahrzeug mit einer Brennkraftmaschine, die mit einer Abgasanlage verbunden ist, das ein Abgasreinigungssystem und ein Heizsystem gemäß zumindest einer der vorstehend beschriebenen Ausführungsformen umfasst. Das Heizsystem ist derart mit der Abgasanlage verbunden, dass durch das Heizsystem erzeugtes heißes Verbrennungsprodukt dem Abgasreinigungssystem bedarfsgerecht zuführbar ist, um dieses vorzuheizen.

Gemäß einer Ausführungsform ist das Abfuhrsystem des Heizsystems stromaufwärts des Abgasreinigungssystems mit der Abgasanlage verbunden. Das Zufuhrsystem steht nicht in strömungswirksamer Verbindung mit der Abgasanlage. Bei dieser Ausführungsform besteht somit lediglich eine gasführende Verbindung des Heizsystems mit der Abgasanlage, was eine einfache Integration des Systems ermöglicht. Der modulare Charakter erlaubt auch eine problemlose Nachrüstung existierender Abgasanlagen.

Rein beispielhaft wird die vorliegende Erfindung anhand einer vorteilhaften Ausführungsform unter Bezugnahme auf die beigefügten Zeichnungen erläutert. Es zeigen:
- Fig. 1: schematisch eine Abgasanlage mit einem erfindungsgemäßen Heizsystem,
- Fig. 2: das Heizsystem der Fig. 1 in detaillierterer Form und

- Fig. 3: eine weitere Ausführungsform des erfindungsgemäßen Heizsystems.

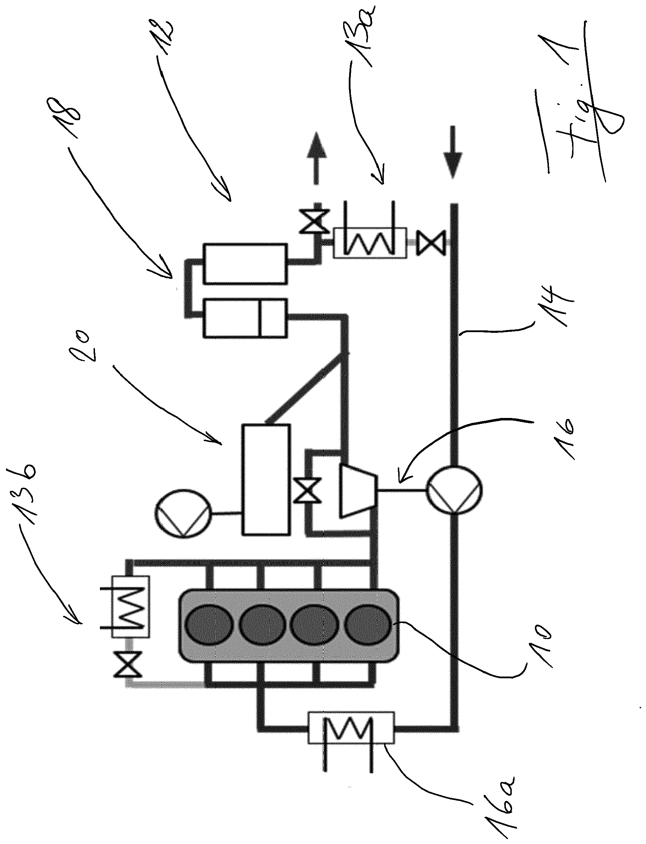

Fig. 1 zeigt eine Brennkraftmaschine 10 (beispielsweise ein Ottomotor oder ein Dieselmotor) mit einer ihr zugeordneten Abgasanlage 12. Die Abgasanlage 12 ist über ein Abgasrückführungssystem (AGR-System) mit Hochdruck- und Niederdruckkomponenten 13b bzw. 13a in grundsätzlich bekannter Weise mit der Gaszufuhr 14 der Brennkraftmaschine 10 verbunden. Außerdem sind ein Turbolader 16 und ein Ladeluftkühler 16a vorgesehen. Es versteht sich, dass das Konzept der vorliegenden Erfindung auch auf Motoren mit anderen Konfigurationen, also etwa ohne AGR-System 13a, 13b und/oder ohne Turbolader 16, anwendbar ist.

Die Abgasanlage 12 weist ein Abgasreinigungssystem 18 auf, das einen Katalysator oder mehrerer Katalysatoren umfasst. Wie eingangs erläutert wurde, ist der Wirkungsgrad dieser Katalysatoren temperaturabhängig. Um sie möglichst schnell auf Betriebstemperatur zu bringen und damit auch nach einem Kaltstart eine effiziente Abgasnachbehandlung sicherzustellen, ist ein Heizsystem 20 vorgesehen, das zur raschen Vorheizung des Abgasreinigungssystems 18 dient.

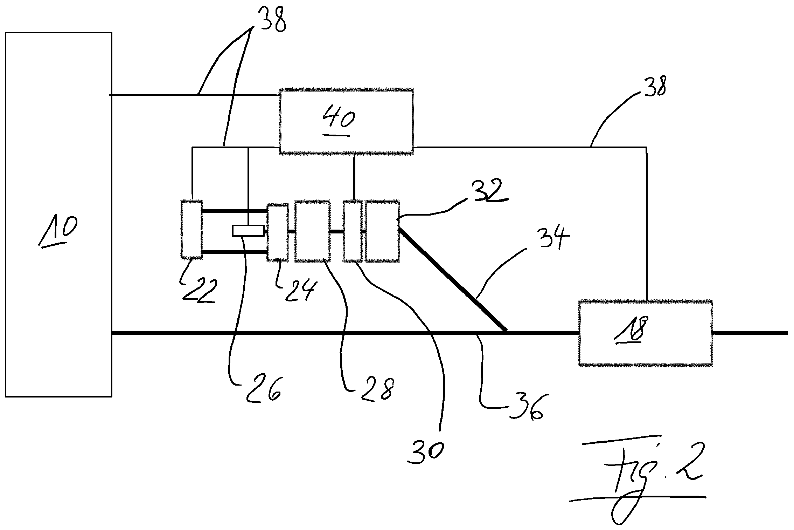

Fig. 2 zeigt das Heizsystem 20 schematisch in einer etwas detaillierteren Darstellung. Es umfasst eine Umgebungsluftpumpe 22, die Umgebungsluft ansaugt. Die Pumpe 22 steht eingangsseitig somit nicht mit der Abgasanlage 12 in Verbindung.

Über ein oder mehrere Einlassrohre (gezeigt sind im vorliegenden Beispiel zwei Rohre) steht die Pumpe 22 mit einer Drallkammer 24 in Verbindung. In der Drallkammer 24 sind geeignete Strömungsleitelemente angeordnet, um dem eingebrachten Umgebungsluftstrom zumindest eine Drallkomponente aufzuprägen oder in anderer Form zu verwirbeln. Dies kann zusätzlich oder alternativ durch ein entsprechendes Eindüsen der Umgebungsluft bewirkt werden.

Durch eine Dosiereinheit 26 wird Brennstoff (z.B. der gleiche Brennstoff, mit dem die Maschine 10 betrieben wird) in die Drallkammer 24 eingespritzt, sodass es dort und/oder in einem stromabwärts angeordneten (optionalen) Mischrohr 28 mit dem drallbeaufschlagten oder verwirbelten Umgebungsluftstrom gut vermischt wird. Auch in dem Mischrohr 28 können Strömungsleitelemente angeordnet sein, um eine möglichst homogene Vermischung des Brennstoffs in der Umgebungsluft zu bewirken, ohne dabei einen zu großen Strömungswiderstand zu erzeugen.

Es ist auch denkbar, dass in dem Mischrohr 28 oder in einer stromabwärts gelegenen Komponente Strömungsleitelemente vorgesehen sind, die zur Reduktion der Verwirbelungen in dem Brennstoff-Umgebungsluft-Gemisch dienen. Wenn nämlich die Vermischung des Brennstoffs mit der Umgebungsluft hinreichend gut ist, besteht oftmals kein Bedarf mehr für Verwirbelungen. In vielen Fällen ist es vorteilhaft, wenn die nachfolgend noch näher zu beschreibende Katalyseeinrichtung möglichst linear angeströmt wird. Daher ist es auch denkbar, auf die Erzeugung von Verwirbelungen in dem Umgebungsluftstrom und/oder dem Brennstoff-Umgebungsluft-Gemisch zu verzichten, wenn auf andere Art sichergestellt ist, dass der Brennstoff hinreichend gut in der Umgebungsluft verteilt ist. Beispielsweise kann dies durch eine geeignete Eindosierung des Brennstoffs in die Umgebungsluft erreicht werden.

In Fig. 2 ist die Verbindung zwischen der Kammer 24 und dem Mischrohr 28 durch einen kurzen Rohrabschnitt symbolisiert. Es ist aber auch denkbar, dass die Kammer 24 und das Mischrohr 28 ineinander übergehen oder sogar Abschnitte eines gemeinsamen rohrartigen Elements sind.

Gleiches gilt für einen Übergang in eine stromabwärts des Mischrohrs 28 gelegene (optionale) Heizeinrichtung 30 und einen Übergang von der Heizeinrichtung 30 in eine Prozesskammer 32.

Die Heizeinrichtung 30 dient dazu, das Brennstoff-Umgebungsluft-Gemisch zu erwärmen, bevor es in die Prozesskammer 32 eintritt, in der die Katalyseeinrichtung (nicht gezeigt) angeordnet ist. Die Katalyseeinrichtung wird von dem angewandten Gemisch an- und/oder durchströmt, wobei das katalytisch wirksame Material der Katalyseeinrichtung, dass bevorzugt eine abschnittsweise Beschichtung eines Substrats bildet, für eine exotherme Reaktion des Brennstoffs mit dem Sauerstoff der Umgebungsluft sorgt. Die vorherige Erwärmung des Gemisches steigert die Effizienz der Katalyse. Unter Umständen ist die Erwärmung sogar notwendig, um die Katalyse in Gang zu setzen.

Eine weitere Maßnahme zur Erhöhung der Effizienz besteht darin, für eine große Oberfläche der an- und/oder umströmten Bereiche oder Abschnitte der Katalyseeinrichtung zu sorgen. Beispielsweise weist diese eine Vielzahl von Kanälen auf. Gemäß einer Ausführungsform sind diese in einem Querschnitt wabenartig ausgestaltet.

Anders als in Fig. 2 dargestellt, kann die Heizeinrichtung 30 in der Prozesskammer 32 angeordnet sein. Es ist auch möglich, dass die Heizeinrichtung 30 in direktem Kontakt mit der Katalyseeinrichtung steht, sodass nicht nur das Gemisch, sondern auch die Katalyseeinrichtung direkt, nämlich durch Wärmeleitung, erwärmt wird. Die Heizeinrichtung 30 kann auch in die Katalyseeinrichtung integriert sein, sodass keine Vorheizung des Gemisches, sondern im Wesentlichen eine direkte Heizung der Katalyseeinrichtung erfolgt. Die Heizeinrichtung 30 ist bevorzugt elektrisch betreibbar, beispielsweise umfasst sie eine Widerstandsheizung.

Der aus der Prozesskammer 32 austretende heiße Gasmassenstrom wird über eine Abfuhrleitung 34 in einen Abgasstrang 36 der Brennkraftmaschine 10 eingeleitet. Der heiße Gasmassenstrom erwärmt den in dem Abgasstrang 36 geführten Abgasstrom der Brennkraftmaschine 10, der gerade nach einem Kaltstart der Brennkraftmaschine 10 vergleichsweise kühl ist, sodass der oder die Katalysatoren des stromabwärts angeordneten Abgasreinigungssystems 18 schneller ihre Betriebstemperatur erreichen. Es kann auch vorgesehen sein, dass der heiße Gasmassenstrom direkt in das Abgasreinigungssystem 18 eingespeist wird, um ein noch schnelleres Erreichen der Betriebstemperatur zu bewirken.

Die Umgebungsluftpumpe 22, die Dosiereinheit 26, die Heizeinrichtung 30 und das Abgasreinigungssystem 18 sind über Steuerleitungen 38 mit einer Steuereinrichtung 40 verbunden, die das Heizsystem 20 und das Abgasreinigungssystem 18 bedarfsgerecht steuert. Das Heizsystem 20 und das Abgasreinigungssystem 18 können Sensoren (nicht gezeigt) umfassen, deren Daten ebenfalls in die Steuereinrichtung 40 eingespeist werden, um den Betrieb der genannten Komponenten an den jeweiligen Bedarf anzupassen. Insbesondere kann vorgesehen sein, die in dem Abgasreinigungssystem 18 herrschende Temperatur zu ermitteln und das Heizsystem 20 entsprechend zu betreiben. Beispielsweise kann dessen Leistung (gegebenenfalls auf null) reduziert werden, wenn ein bestimmter Temperaturschwellwert, etwa die Betriebstemperatur des Abgasreinigungssystem 18, erreicht wird. Die Steuereinrichtung 40 kann auch die vorstehend erwähnten Ventil- oder Drosseleinrichtungen - falls vorgesehen - steuern.

Die Steuereinrichtung 40 kann über eine Steuerleitung 38 mit einer Steuerung (nicht gezeigt) der Brennkraftmaschine 10 verbunden sein, um deren Daten zu nutzen und/oder von dieser Befehle zu erhalten (und umgekehrt). Die Steuereinrichtung 40 kann auch in die Steuerung integriert sein.

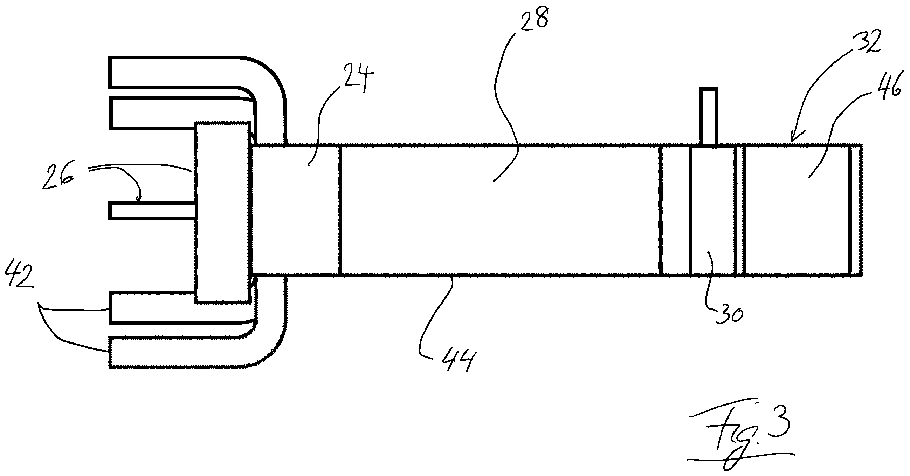

Fig. 3 zeigt Teile einer weiteren Ausführungsform des Heizsystems 20. Mit der Umgebungsluftpumpe 22 (nicht gezeigt) in Verbindung stehende Einlassrohre 42 (hier beispielhaft 4 gezeigt) münden in Umfangsrichtung verteilt angeordneten Positionen seitlich in die Drallkammer 24 ein, um eine Verwirbelung des Umgebungsluftstroms zu erzeugen. Die Verwirbelung wird durch entsprechende Strömungsleitelemente (nicht gezeigt) verstärkt (optionale Maßnahme). Die Dosiereinheit 26 sprüht feine Tröpfchen des Brennstoffs in die Drallkammer 24 ein.

Die Drallkammer 24 ist ein Abschnitt eines rohrförmigen Gehäuses 44. Ein stromabwärts der Drallkammer 24 angeordneter Bereich des Gehäuses 44 bildet das Mischrohr 28, in dem - falls erforderlich - ebenfalls Strömungsleitelemente (nicht gezeigt) angeordnet sein können, einerseits um die Vermischung des Brennstoffs mit der Umgebungsluft zu unterstützen und/oder - in einem stromabwärtigen Bereich - die Verwirbelung des Gemischs wieder zu reduzieren.

Ein stromabwärtiger Endabschnitt des Gehäuses 44 bildet die Prozesskammer 32. Er ist - beispielsweise über einen konischen Sammelabschnitt (nicht gezeigt) - mit der nicht gezeigten Abfuhrleitung 34 verbunden. In der Prozesskammer 32 ist eine Katalyseeinrichtung 46 angeordnet.

Zwischen dem als Mischrohr 28 fungierenden Gehäuseabschnitt und dem als Prozesskammer 32 fungierenden Endabschnitt ist die Heizeinrichtung 30 angeordnet, um das Brennstoff-Umgebungsluft-Gemisch zu erwärmen. Wie vorstehend bereits erläutert wurde, kann die Heizeinrichtung 30 auch direkt mit der Katalyseeinrichtung 46 in Kontakt stehen oder in diese integriert sein.

### Bezugszeichenliste

- 10: Brennkraftmaschine
- 12: Abgasanlage
- 13a, 13b: AGR-System
- 14: Gaszufuhr
- 16: Turbolader
- 16a: Ladeluftkühler
- 18: Abgasreinigungssystem
- 20: Heizsystem
- 22: Umgebungsluftpumpe
- 24: Drallkammer
- 26: Dosiereinheit
- 28: Mischrohr
- 30: Heizeinrichtung
- 32: Prozesskammer
- 34: Abfuhrleitung
- 36: Abgasstrang
- 38: Steuerleitung
- 40: Steuereinrichtung
- 42: Einlassrohr
- 44: Gehäuse
- 46: Katalyseeinrichtung

## Patentansprüche

**1.** Heizsystem für ein Fahrzeug mit einer Brennkraftmaschine (10), insbesondere zum Vorheizen eines Abgasreinigungssystems (18), umfassend
- eine Prozesskammer (32) mit einer Katalyseeinrichtung (46) zur katalytischen Verbrennung eines Brennstoffs, insbesondere eines flüssigen Brennstoffs, mit Umgebungsluft,
- ein mit der Prozesskammer in Verbindung stehendes Zufuhrsystem zur Versorgung der Prozesskammer mit einen Brennstoff-Umgebungsluft-Gemisch und
- ein Abfuhrsystem (34) zur Abfuhr eines durch die katalytische Verbrennung erwärmten Gasgemisches aus der Prozesskammer,
wobei das Zufuhrsystem dazu eingerichtet und ausgebildet ist, Umgebungsluft anzusaugen.

**2.** Heizsystem nach Anspruch 1,
wobei das Zufuhrsystem eine Luftpumpe (22) zum Ansaugen von Umgebungsluft umfasst.

**3.** Heizsystem nach Anspruch 1 oder 2,
wobei das Zufuhrsystem eine Drallerzeugungseinrichtung zur Erzeugung eines drallbeaufschlagten Umgebungsluftstroms umfasst, insbesondere wobei die Drallerzeugungseinrichtung in einer Drallkammer (24) angeordnet ist.

**4.** Heizsystem nach Anspruch 3,
wobei die Drallkammer (24) mit zumindest zwei, bevorzugt mit mehreren separaten Einlasspfaden (42), insbesondere Einlassleitungen oder Einlassrohren, in Verbindung steht, mittels derer Umgebungsluft in die Drallkammer einbringbar ist.

**4.** Heizsystem nach Anspruch 3 oder 4,
wobei die Drallkammer (24) über zumindest einen Auslasspfad (34), insbesondere über zumindest eine Auslassleitung oder ein Auslassrohr, mit der Prozesskammer (32) in Verbindung steht.

**5.** Heizsystem nach einem der vorstehenden Ansprüche,
wobei das Zufuhrsystem eine Injektionsvorrichtung (26) zum Einbringen des Brennstoffs in die Umgebungsluft, insbesondere in den drallbeaufschlagten Umgebungsluftstrom, zur Erzeugung des Brennstoff-Umgebungsluft-Gemischs umfasst.

**6.** Heizsystem nach einem der vorstehenden Ansprüche,
wobei stromaufwärts der Prozesskammer (32) eine Strömungsleiteinrichtung vorgesehen ist, die derart ausgebildet und angeordnet ist, um Drallkomponenten einer Strömung des Brennstoff-Umgebungsluft-Gemischs zu reduzieren.

**7.** Heizsystem nach einem der vorstehenden Ansprüche,
wobei die Katalyseeinrichtung (46) derart ausgestaltet und angeordnet ist, dass sie zumindest abschnittsweise von dem Brennstoff-Umgebungsluft-Gemisch umströmbar und/oder durchströmbar ist.

**8.** Heizsystem nach einem der vorstehenden Ansprüche,
wobei die Katalyseeinrichtung (46) zumindest teilweise aus einem katalytisch wirksamen Material besteht oder ein Substrat umfasst, das mit einem solchen Material beschichtet ist, insbesondere wobei das katalytisch wirksame Material ein Metall und/oder ein Mischoxid umfasst und/oder insbesondere wobei das Substrat ein Metall und/oder einen keramischen Werkstoff umfasst.

**9.** Heizsystem nach einem der vorstehenden Ansprüche,
wobei die Katalyseeinrichtung (46) eine Heizeinrichtung umfasst, insbesondere wobei die Heizeinrichtung elektrisch betreibbar ist.

**10.** Heizsystem nach einem der vorstehenden Ansprüche,
wobei stromaufwärts der Katalyseeinrichtung (46) eine Heizeinrichtung (30) angeordnet ist, insbesondere wobei die Heizeinrichtung elektrisch betreibbar ist.

**11.** Heizsystem nach einem der vorstehenden Ansprüche,
wobei eine Steuereinrichtung (40) vorgesehen ist, mit der die Luftpumpe (22), die Injektionsvorrichtung (26) und/oder die Heizeinrichtung (30) ansteuerbar sind.

**12.** Fahrzeug mit einer Brennkraftmaschine (10), die mit einer Abgasanlage (12) verbunden ist, die ein Abgasreinigungssystem (18) und ein Heizsystem (20) gemäß zumindest einem der vorstehenden Ansprüche umfasst, wobei das Heizsystem derart mit der Abgasanlage verbunden ist, dass durch das Heizsystem erzeugtes heißes Verbrennungsprodukt dem Abgasreinigungssystem bedarfsgerecht zuführbar ist, um dieses vorzuheizen.

**13.** Fahrzeug nach einem der vorstehenden Ansprüche,
wobei das Abfuhrsystem (34) des Heizsystems stromaufwärts des Abgasreinigungssystems (18) mit der Abgasanlage (12) verbunden ist und wobei das Zufuhrsystem nicht in strömungswirksamer Verbindung mit der Abgasanlage steht.
